# EUROPÄISCHE PATENTSCHRIFT

(11) **EP 4 088 224 B1**
(45) Veröffentlichungstag und Bekanntmachung des Hinweises auf die Patenterteilung: **12.08.2026**
(21) Anmeldenummer: 20830142.4
(22) Anmeldetag: 15.12.2020
(51) Int. Cl.: G06V 20/56, G06F 18/25

(54) **VERFAHREN ZUR ZUSAMMENFÜHRUNG MEHRERER DATENSÄTZE FÜR DIE ERZEUGUNG EINES AKTUELLEN SPURMODELLS EINER FAHRBAHN UND VORRICHTUNG ZUR DATENVERARBEITUNG**
DATA SETS FUSION METHOD FOR THE GENERATION OF CURRENT TRACK MODEL F A ROAD AND DATA PROCESSING APPARATUS
PROCÉDÉ DE RÉUNION DE PLUSIEURS ENSEMBLES DE DONNÉES POUR LA GÉNÉRATION D'UN MODÈLE DE VOIE ACTUEL D'UNE VOIE DE CIRCULATION ET DISPOSITIF DE TRAITEMENT DE DONNÉES

(30) Priorität: 09.01.2020 DE 102020200169
(43) Veröffentlichungstag der Anmeldung: 16.11.2022
(73) Patentinhaber: VOLKSWAGEN AKTIENGESELLSCHAFT, 38440 Wolfsburg (DE)
(72) Erfinder: VAN ENDE, Kristof, 38102 Braunschweig (DE)
(86) Internationale Anmeldenummer: PCT/EP2020/086289
(87) Internationale Veröffentlichungsnummer: WO 2021/139974

(56) Entgegenhaltungen:
- ILIC VELIBOR ET AL: "Development of sensor fusion based ADAS modules in virtual environments", PROC. ZOOMING INNOV. CONSUM. TECHNOL. CONF. (ZINC), 31 May 2018 (2018-05-31), Novi Sad, Serbia, pages 88 - 91, XP093214338, Retrieved from the Internet <URL:https://ieeexplore.ieee.org/stamp/stamp.jsp?tp=&arnumber=8448849> [retrieved on 20241011]
- CAPPELLO FRANCESCO ET AL: "Multi-sensor Data Fusion Techniques for RPAS Navigation and Guidance", 16TH AUSTRALIAN INTERNATIONAL AEROSPACE CONGRESS (AIAC16), 24 February 2015 (2015-02-24), XP055785674, Retrieved from the Internet <URL:https://www.researchgate.net/publication/272791142_Multi-sensor_Data_Fusion_Techniques_for_RPAS_Navigation_and_Guidance> [retrieved on 20210315], DOI: 10.13140/2.1.4421.4561
- POLYCHRONOPOULOS A ET AL: "Sensor Fusion for Predicting Vehicles' Path for Collision Avoidance Systems", IEEE TRANSACTIONS ON INTELLIGENT TRANSPORTATION SYSTEMS, IEEE, PISCATAWAY, NJ, USA, vol. 8, no. 3, 30 September 2007 (2007-09-30), pages 549 - 562, XP011191510, ISSN: 1524-9050, DOI: 10.1109/TITS.2007.903439

## Beschreibung

Die Erfindung betrifft ein Verfahren zur Zusammenführung mehrerer Datensätze für die Erzeugung eines aktuellen Spurmodells einer Fahrbahn und eine Vorrichtung zur Datenverarbeitung.

Heutige und zukünftige Fahrerassistenzsysteme, insbesondere bei autonomen Fahrzeugen, müssen immer komplexere Fahrsituationen abbilden. Dabei kann es wichtig sein, den Fahrbahnverlauf in einem Bereich vor dem Fahrzeug genau zu erfassen, um die Planung eines sicheren Fahrwegs genau durchführen zu können. Es ist bekannt, in solchen Situation das Umfeld des Fahrzeugs in hoher Güte abzubilden, was bspw. die Modellierung der Fahrbahnen umfasst. Ein autonomes Fahrzeug kann für die Modellierung des Fahrbahnverlaufs eine Vielzahl unterschiedlicher Sensor- bzw. Datenquellen analysieren.

Aus der deutschen Offenlegungsschrift DE 10 2010 005 293 A1 ist ein Verfahren zum Schätzen eines projizierten Fahrpfads für ein Fahrzeug auf einer Straße bekannt, wobei in dem Verfahren mehrere Sensoreingänge überwacht werden. Auf Grundlage der überwachten Sensoreingänge werden eine Straßengeometrie und eine Fahrzeugposition in Relation zu der Straßengeometrie ermittelt. Des Weiteren werden mehrere Partikelpunkte vor dem Fahrzeug, welche einen potentiellen Fahrpfad darstellen, aus der Straßengeometrie und der Fahrzeugposition ermittelt und iterativ ermittelte Partikelpunkte verwendet, um das Fahrzeug zu navigieren. Dabei werden Partikelpunkte der mehreren Partikelpunkte, die das Fahrzeug passiert hat, weggelassen.

In dem Verfahren können die Sensoren auch einen Schätzwert tatsächlicher Details der Straße oder von Objekten auf der Straße vor dem Fahrzeug bereitstellen, wobei einige beim Schätzen bestimmte Parameter zuverlässiger sind als andere. Nachteilig bei dem Verfahren ist, dass die Zuverlässigkeit der Sensoren bei unterschiedlichen Umgebungsbedingungen bzw. Fahrsituationen nicht unterschiedlich bewertet bzw. berücksichtigt wird.

Die deutsche Offenlegungsschrift DE 10 2017 209 346 A1 beschreibt ein Verfahren zur Erstellung einer fahrspurgenauen Straßenkarte. Das Verfahren weist das Bereitstellen einer digitalen fahrbahngenauen Straßenkarte und eines Trajektoriendatensatzes auf und das Identifizieren wenigstens einer Straße unter Segmentieren der fahrbahngenauen Straßenkarte in ein Straßensegment. Außerdem modelliert das Verfahren das Straßensegment in wenigstens ein Straßenmodell, wobei das Straßenmodell Parameter zur Beschreibung von Fahrspuren der Straße aufweist.

Nachteilig bei dem Verfahren ist, dass es unterschiedliche Fahrsituationen und die Umgebungsbedingungen eines einzelnen Fahrzeugs und deren Bewertung bei der Erstellung der Straßenkarte unberücksichtigt lässt.

Die bekannten Lösungen versuchen regelbasiert bzw. modellbasiert die Zuverlässigkeit der Sensoren bei der Erzeugung eines Spurmodells der Fahrbahn zu berücksichtigen, stellen aber keine vollständig integrierte Umsetzung einer Erzeugung des Spurmodells der Fahrbahn bestehend aus modellbasiertem Ansatz und situativen Vertrauensmaßen bereit.

Multi-Sensor-Datenfusionstechniken für RPAS-Navigation und -Lenkung sind bekannt aus: Cappello Francesco ET AL: "Multi-sensor Data Fusion Techniques for RPAS Navigation and Guidance", 16th Australian International Aerospace Congress (AIAC16), 24. Februar 2015 (2015-02-24), DOI: 10.13140/2.1.4421.4561 [gefunden am 2021-03-15].

Sensorfusion zur Vorhersage des Fahrzeugwegs für Kollisionsvermeidungssysteme ist bekannt aus: POLYCHRONOPOULOS A ET AL: "Sensor Fusion for Predicting Vehicles' Path for Collision Avoidance Systems", IEEE TRANSACTIONS ON INTELLIGENT TRANSPORTATION SYSTEMS, IEEE, PISCATAWAY, NJ, USA,Bd. 8, Nr. 3, 1. September 2007 (2007-09-01), Seiten 549-562, ISSN: 1524-9050, DOI: 10.1109/TITS.2007.903439.

Sensorfusion für ADAS ("Advanced Driving Assistance Systems") ist zum Beispiel bekannt aus Ilic Velibor ET AL: "Development of sensor fusion based ADAS modules in virtual environments", Proc. Zooming Innov. Consum. Technol. Cont. (ZINC), 31. Mai 2018 (2018-05-31), Seiten 88-91.

Aufgabe der vorliegenden Erfindung ist es daher, ein Verfahren zur Zusammenführung mehrerer Datensätze für die Erzeugung eines aktuellen Spurmodells einer Fahrbahn und eine Vorrichtung zur Datenverarbeitung bereitzustellen, welche die oben genannten Nachteile wenigstens teilweise überwinden.

Diese Aufgabe wird durch das erfindungsgemäße Verfahren nach Anspruch 1, das Computerprogramm nach Anspruch 6 und die Vorrichtung zur Datenverarbeitung nach Anspruch 7 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Verfahren zur Zusammenführung mehrerer Datensätze für die Erzeugung eines aktuellen Spurmodells einer Fahrbahn, umfasst:
Zusammenführen der Datensätze für die Erzeugung des aktuellen Spurmodells der Fahrbahn auf Grundlage wenigstens eines Gewichtsfaktors, wobei der Gewichtsfaktor mittels maschinellen Lernens ermittelt ist.

Wie eingangs erwähnt, kann bei autonomen Fahrzeugen eine genaue Modellierung des Fahrbahnverlaufs wünschenswert sein, um die Planung eines sicheren Fahrwegs genau durchführen zu können. Dafür kann eine genaue Darstellung des Umfelds des Fahrzeugs und der Fahrspuren notwendig sein. Daher wird das hierin beschriebene Verfahren in manchen Ausführungsbeispielen insbesondere in einem Kraftfahrzeug durchgeführt, ohne auf diesen Fall beschränkt zu sein.

Das Verfahren kann grundsätzlich auf einem Computer ausgeführt werden, insbesondere einem Bordcomputer oder einem Steuergerät in einem Kraftfahrzeug. Der Computer weist dafür elektronische Komponenten wie bspw. eine oder mehrere CPUs (von "Central Processing Unit"), eine oder mehrere GPUs (von "Graphical Processing Unit"), einen oder mehrere ASICs (von "Application Specific Integrated Circuit"), elektronische Speicherelemente oder dergleichen auf, die typischerweise für die in dem Verfahren notwendigen Berechnungen verwendet werden. In Ausführungsbeispielen im Kraftfahrzeugumfeld kann das Verfahren insbesondere auf einem Steuergerät oder Bordcomputer oder dergleichen ausgeführt werden oder auf mehrere Steuergeräte, Prozessoren, GPUs, ASICs oder dergleichen entsprechend verteilt werden, um das hierin beschriebene Verfahren auszuführen.

Die Zusammenführung und Analyse einer Vielzahl unterschiedlicher Sensor- bzw. Datenquellen eines Kraftfahrzeugs kann dabei vorteilhaft für eine genaue und zuverlässige Bestimmung eines aktuellen Spurmodells der Fahrbahn sein, auf welcher bspw. das Kraftfahrzeug fährt. Dadurch kann bei manchen Ausführungsbeispielen bspw. ein Ausfall eines Sensors bzw. der Wegfall eines Datensatzes durch andere ausgeglichen werden, wodurch das Gesamtsystem robuster gegenüber Systemfehlern wird. Die Wahrscheinlichkeit für die Detektion eines Objektes, von Fahrbahnmarkierungen oder dergleichen im Umfeld des Kraftfahrzeugs kann in manchen Ausführungsbeispielen ebenfalls erhöht werden, sowie eine Auflösung von dabei unter Umständen auftretenden Mehrdeutigkeiten verbessert werden. Außerdem kann bei manchen Ausführungsbeispielen den unterschiedlichen Stärken der verschiedenen Sensor- bzw.

Datenquellen Rechnung getragen werden, wie sich auch aus der folgenden Beschreibung ergibt.

Bei einer Zusammenführung mehrerer Datensätze (auch als Fusion verschiedener Sensor- bzw. Datenquellen bekannt, welche insbesondere auf sogenannten High-Level-Daten basieren kann) kann die Güte bzw. Genauigkeit der Sensoren bzw. der entsprechenden Datenpunkte in den Datensätzen modellbasiert erfasst werden. Eine modellbasierte Ermittlung von Streuungsmaßen bzw. Genauigkeiten der Datenpunkte der Datensätze kann eine Bewertung basierend auf Erfahrungswerten oder technischen Eigenschaften der Sensoren bzw. Datenquellen aufweisen, wobei dieses Bewertungsmodell für eine Vielzahl an unterschiedlichen Fahrsituationen angenommen wird. Aufgrund der beschränkten Genauigkeit der einzelnen Datenpunkte der Datensätze kann eine Zusammenführung der Datensätze eine Erhöhung der Genauigkeit im Vergleich zu den einzelnen Datensätzen ermöglichen.

Es wurde erkannt, dass eine modellbasierte Abschätzung der Genauigkeit in verschiedenen Fahrsituationen vorteilhaft ergänzt werden kann, indem die aktuelle Fahrsituation bei der Bewertung der Genauigkeit der Datensätze bzw. Sensoren bei der Zusammenführung mehrerer Datensätze für die Erzeugung eines aktuellen Spurmodells einer Fahrbahn berücksichtigt wird. Dadurch kann der Fahrbahnverlauf in manchen Ausführungsbeispielen genauer und zuverlässiger modelliert werden. Dies wird in der vorliegenden Erfindung bei manchen Ausführungsbeispielen berücksichtigt.

Eine Zusammenführung mehrerer Datensätze kann in manchen Ausführungsbeispielen eine Transformation der unterschiedlichen Datensätze in ein einheitliches Datenformat aufweisen, wie z. B. eine Transformation in ein einheitliches Bezugssystem oder Koordinatensystem, in dem die Datensätze gemeinsam beschrieben werden können. Dies ist vorteilhaft, da dadurch die nachfolgenden Berechnungs- bzw. Analyseschritte unabhängig von der Art und Anzahl der Datensätze bzw. der genutzten Sensoren ist, die einen Datensatz bereitstellen. Bei manchen Ausführungsbeispielen kann eine Zusammenführung mehrerer Datensätze auch eine modellbasierte Abschätzung der Genauigkeit von Datenpunkten der Datensätze aufweisen.

Ein Datensatz kann dabei allgemein von verschiedenen Umfeld- (Kamera, Radar, Abstandssensor, etc.), Eigenbewegungssensoren (bspw. Geschwindigkeits-, Beschleunigungs-, Drehraten-, Positionssensor (bspw. GPS) oder dergleichen) oder allgemein Datenquellen bereitgestellt bzw. aus diesen erzeugt werden (Vorverarbeitung vor der Zusammenführung). In manchen Ausführungsbeispielen können die Sensoren kostengünstige Sensoren aus der Serie sein.

Eine Erzeugung kann bspw. eine Merkmalsextraktion bei einem Kamerabild sein (Kanten, Eckpunkte, etc.) oder ein Bestimmen von Fahrbahnparametern (Breite, Spuranzahl, Krümmung, Position von Fahrbahnmarkierungen, etc.) aus einer (digitalen) Karte basierend auf einer ermittelten Position des Fahrzeugs aus den Sensordaten. Die Datensätze sind dabei grundsätzlich für die Bestimmung bzw. Erzeugung eines aktuellen Spurmodells einer Fahrbahn geeignet.

Die Datensätze können daher z. B. Positionsdaten bzw. Koordinaten, Winkelangaben oder allgemein eine mathematische oder datentechnische Repräsentation von relevanten Objekten (bspw. eigenes Fahrzeug, andere Fahrzeuge, etc.) oder relevanter (Fahrbahn-)Merkmale (Fahrbahnmarkierungen, Verkehrszeichen, etc.) oder dergleichen bezüglich eines vorgegebenen Koordinatensystems aufweisen und mehrere Datenpunkten beinhalten (z. B. kann eine Fahrbahnmarkierung durch mehrere Punkte beschrieben werden und ein Datensatz kann mehrere Fahrbahnmarkierungen aufweisen). Ein Datenpunkt kann folglich bei manchen Ausführungsbeispielen ein Merkmal sein (z. B. ein Fahrbahn-Merkmal wie eine Fahrbahnmarkierung oder -begrenzung, welches aus einem Kamerabild extrahiert wurde), welches bspw. durch Koordinaten und Winkelangaben beschrieben wird. Bei Ausführungsbeispielen in einem Kraftfahrzeug können die Datensätze z. B. von einer Egomotion-Schätzung, einer Kamera, einer Karte (bspw. digitale Straßenkarte), einer Objektspur (bspw. Positionen anderer Verkehrsteilnehmer), einem Radar-System oder dergleichen bereitgestellt werden. In manchen Ausführungsbeispielen sind die Datensätze zeitlich synchronisiert, so dass Datenpunkte in verschiedenen Datensätzen, welche einem gleichen Merkmal oder Objekt oder dergleichen entsprechen, mit höherer Wahrscheinlichkeit auch an ähnlichen Positionen im Umfeld des Fahrzeugs anzutreffen sind. In solchen Ausführungsbeispielen kann eine Assoziation bzw. eine Zuordnung der Datenpunkte aus verschiedenen Datensätzen zu einem gemeinsamen Datenpunkt leichter durchgeführt werden.

Ein aktuelles Spurmodell einer Fahrbahn kann in manchen Ausführungsbeispielen einen oder mehrere Fahrbahnparameter (bspw. Spurbreite, Spuranzahl, Art der Spur (z. B. Beschleunigungsspur oder Parkstreifen), etc.) und/oder eine mathematische Repräsentation eines Verlaufs der Fahrbahn bzw. der Fahrspuren (z.B. durch ein Polynom, ein Spline, etc.) und/oder eine Menge an Fahrbahn-Merkmalen (Fahrbahnmarkierungen, -begrenzungen, etc.) in einer datentechnischen Repräsentation aufweisen, wobei das aktuelle Spurmodell der Fahrbahn möglichst in der gegenwärtigen Fahrsituation des Fahrzeugs bzw. zum gegenwärtigen Zeitpunkt erzeugt ist und somit den aktuellen Fahrbahnverlauf vor dem Fahrzeug bestmöglich modelliert. Das aktuelle Spurmodell der Fahrbahn kann sich daher bei manchen Ausführungsbeispielen auf den Zeitpunkt des Bereitstellens der Datensätze beziehen, was vorzugsweise zeitlich nah an dem gegenwärtigen Zeitpunkt liegt. In manchen Ausführungsbeispielen kann das aktuelle Spurmodell der Fahrbahn auch basierend auf vorherigen zusammengeführten Datensätzen erzeugt werden. Bei manchen Ausführungsbeispielen wird das aktuelle Spurmodell der Fahrbahn iterativ erzeugt, d. h. das aktuelle Spurmodell der Fahrbahn kann basierend auf einem vorher prädizierten Spurmodell der Fahrbahn erzeugt werden. In solchen Ausführungsbeispielen kann zu Beginn der Erzeugung (wo noch kein Spurmodell erzeugt ist) ein geschätztes Start-Spurmodell angenommen werden, welches bspw. einem geraden Fahrbahnverlauf, einem einzelnen Fahrbahn-Merkmal oder dergleichen entsprechen kann, welches im weiteren zeitlichen Verlauf verbessert oder erweitert wird.

Grundsätzlich kann die Genauigkeit und Zuverlässigkeit des aktuellen Spurmodells der Fahrbahn von den Genauigkeiten (z. B. quantifiziert durch eine Varianz oder Standardabweichung oder dergleichen eines lateralen und/oder Gierwinkelfehlers in Abhängigkeit unterschiedlicher Faktoren) von Datenpunkten der Datensätze bzw. der Genauigkeit der ermittelten Merkmale (im Folgenden zusammenfassend für Positionen von Objekten, Fahrbahn-Merkmalen, etc.) in den Datensätzen abhängen.

Wie oben erwähnt, können diese modellbasiert ermittelt werden. Eine modellbasierte Ermittlung kann aber die große Anzahl an verschiedenen Fahrsituationen nicht immer abdecken. Verschiedene Fahrsituationen können durch variierende Umweltbedingungen (bspw. Regen, Schnee, Helligkeit, Nachtfahrt, und dergleichen), Fahrbahnparametern (bspw. Steigungen, Gefälle, enge Kurvenfahrt, etc.), Verkehrsdichten (z. B. im Stau), Fahrzuständen (bspw. Geschwindigkeit, Beschleunigung, etc.) oder dergleichen gegeben sein, wobei eine aktuelle Fahrsituation mit den verschiedenen Sensoren des Fahrzeugs erfasst werden kann. Es wurde erkannt, dass in verschiedenen Fahrsituationen die Genauigkeiten der Datenpunkte eines Datensatzes variieren kann. Ebenso kann eine modellbasierte Ermittlung die große Anzahl an verschiedenen räumlichen Verteilungen von Datenpunkten der Datensätze in den unterschiedlichen Fahrsituationen nicht immer abdecken, insbesondere wenn sich Datenpunkte aus verschiedenen Datensätzen widersprechen. Die Zuverlässigkeit der Datenpunkte kann folglich von den Datensätzen in einer aktuellen Fahrsituation abhängen. Es gilt daher zu beurteilen in welchen Fahrsituationen ein bestimmter Datensatz vertrauenswürdiger (genauer) ist als ein anderer. Dies kann über einen von der Fahrsituation abhängigen Gewichtsfaktor für die Datensätze bei der Zusammenführung der Datensätze berücksichtigt werden. Eine solche situationsabhängige Bewertung der Genauigkeiten der Datensätze kann daher eine genauere und zuverlässigere Bestimmung des aktuellen Spurmodells der Fahrbahn ermöglichen, wodurch die Sicherheit von autonomen Fahrzeugen oder Fahrerassistenzsystemen erhöht wird.

Folglich werden in manchen Ausführungsbeispielen die Datensätze für die Erzeugung des aktuellen Spurmodells der Fahrbahn auf Grundlage wenigstens eines Gewichtsfaktors zusammengeführt, wobei der Gewichtsfaktor mittels maschinellen Lernens ermittelt ist.

Ein Gewichtsfaktor kann grundsätzlich einem Vertrauensmaß für einen Datensatz entsprechen, um situationsabhängige Einflüsse (Fahrsituation und/oder konkrete Datensätze und/oder räumliche Verteilung von Datenpunkten der Datensätze) auf die Bewertung der Genauigkeit der einzelnen Datensätze für die Erzeugung des aktuellen Spurmodells der Fahrbahn zu berücksichtigen. Der wenigstens eine Gewichtsfaktor kann für verschiedene vorgegebene Fahrsituationen ermittelt sein. Es kann bei manchen Ausführungsbeispielen für jeden Datensatz ein Gewichtsfaktor ermittelt werden, ohne das die Erfindung auf diesen Fall beschränkt ist. Der wenigstens eine (maschinell gelernte) Gewichtsfaktor kann in manchen Ausführungsbeispielen einem Kennfeld entsprechen, aus dem gemäß einer aktuellen Fahrsituation der maschinell gelernte Gewichtsfaktor ermittelt wird, wobei in solchen Ausführungsbeispielen der maschinell gelernte Gewichtsfaktor ermittelt wird, der zu einer der vorgegebenen Fahrsituationen korrespondiert, die der aktuellen Fahrsituation am ähnlichsten ist. Solche Ausführungsbeispiele können vorteilhaft sein, da geringe Rechenresourcen benötigt werden bzw. vorhanden sein müssen, um den Gewichtsfaktor für die Zusammenführung mehrerer Datensätze zu ermitteln.

Dies kann vorteilhaft sein, da eine ganzheitliche Lösung der Fusion (Zusammenführung) mehrerer Datensätze zur Erzeugung eines aktuellen Spurmodells der Fahrbahn erreicht werden kann, die sowohl modellbasierte Genauigkeiten von Datenpunkten der Datensätze, als auch eine situationsabhängige Zuverlässigkeit der Datensätze berücksichtigt.

Aufgrund der Vielzahl an möglichen Fahrsituationen und Datensätzen ist der Gewichtsfaktor (vorab) mittels maschinellen Lernens ermittelt. Das maschinelle Lernen kann bspw. mit einem neuronalen Netzwerk, einer Nächste-Nachbar-Klassifikation, einer Support Vector Machine, einem Entscheidungsbaum oder dergleichen oder als bestärkendes Lernen durchgeführt sein bzw. dieses umfassen.

Beim maschinellen Lernen kann in manchen Ausführungsbeispielen eine Vielzahl an verschiedenen Datensätzen bei einer Menge an vorgegebenen Fahrsituationen (wie oben erwähnt bspw. bei variierenden Umweltbedingungen, Fahrzuständen, etc.) bei Referenzfahrten in einem Referenzfahrzeug für das Training eines maschinellen Lernalgorithmus gesammelt werden und auf einem leistungsfähigen Computer, einem Server, einer Cloud oder dergleichen trainiert werden. Ein Referenzfahrzeug kann dabei seine Position sehr genau bestimmen und verfügt über eine sehr genaue (digitale) Straßenkarte (Referenz-Datensatz), um den Gewichtsfaktor basierend auf einer Abweichung zu der sehr genauen (digitalen) Straßenkarte zu ermitteln. Beim maschinellen Lernen wird der Gewichtsfaktor für die vorgegebenen Fahrsituationen ermittelt. Anschließend kann der maschinell gelernte Gewichtsfaktor in manchen Ausführungsbeispielen als Kennfeld abgelegt werden. In anderen Ausführungsbeispielen kann der Gewichtsfaktor auch aus einem trainierten maschinellen Lernalgorithmus bestimmt werden, welcher bspw. im Fahrzeug aufgerufen werden kann (z B. können die trainierten Gewichte eines neuronalen Netzwerks abgelegt werden), um in einer aktuellen Fahrsituation den Gewichtsfaktor für die Zusammenführung mehrerer Datensätze zu bestimmen und so situationsabhängige Einflüsse zu berücksichtigen.

Folglich hängt der wenigstens eine Gewichtsfaktor in manchen Ausführungsbeispielen von einer vorgegebenen Fahrsituation ab. Die (Vielzahl an) vorgegebenen Fahrsituationen können, wie oben erwähnt, beim maschinellen Lernen für das Training eines maschinellen Lernalgorithmus verwendet bzw. parametrisiert worden sein. Zum Beispiel könnte in einer Fahrsituation, in der schlechte Sichtbedingungen vorliegenden, der Gewichtsfaktor widerspiegeln, dass ein Datensatz einer Kamera weniger vertrauenswürdig ist als bspw. ein Datensatz aus einer digitalen Straßenkarte.

In manchen Ausführungsbeispielen hängt der wenigstens eine Gewichtsfaktor von den Datensätzen in einer aktuell ermittelten Fahrsituation ab.

Wie oben erwähnt, kann in manchen Ausführungsbeispielen die Genauigkeit von Datenpunkten der Datensätze in verschiedenen Fahrsituationen variieren, insbesondere bei sich widersprechenden Datenpunkten in den Datensätzen, die sich nicht modellbasiert für alle Fahrsituationen erfassen lässt. Der wenigstens eine Gewichtsfaktor kann in solchen Ausführungsbeispielen somit von den Datensätzen in einer aktuellen Fahrsituation abhängen. Die aktuelle Fahrsituation, welche durch die Sensoren im Fahrzeug bestimmbar ist, kann bei manchen Ausführungsbeispielen einer der vorgegebenen Fahrsituationen entsprechen. In anderen Ausführungsbeispielen kann sich die aktuelle Fahrsituation von den vorgegebenen Fahrsituationen unterscheiden. In solchen Ausführungsbeispielen wird die ähnlichste der vorgegebenen Fahrsituationen ermittelt (ähnlich kann dabei eine Ähnlichkeit bezüglich von (numerischen) Parametern sein, die eine Fahrsituation charakterisieren, d. h. die Ähnlichkeit kann durch eine Metrik bestimmbar sein). Ist eine der vorgegebenen Fahrsituationen basierend auf der aktuellen Fahrsituationen ermittelt, kann der Gewichtsfaktor entsprechend den Datensätzen in der aktuellen Fahrsituation bestimmt werden.

In manchen Ausführungsbeispielen hängt der wenigstens eine Gewichtsfaktor von einer räumlichen Verteilung von Datenpunkten der Datensätze in der aktuell ermittelten Fahrsituation ab.

Die Datenpunkte der Datensätze können, wie oben erwähnt, in manchen Ausführungsbeispielen (extrahierte oder ermittelte) Merkmale sein, welche sich zur Erzeugung eines Spurmodells einer Fahrbahn eignen und können durch Koordinaten, Winkelangaben und dergleichen bzgl. eines vorgegebenen Koordinatensystems beschrieben werden. Vorzugsweise beziehen sich die Datenpunkte auf das gleiche vorgegebene Koordinatensystem (d. h. nach Transformation in ein einheitliches Datenformat), ohne auf diesen Fall beschränkt zu sein. Eine räumliche Verteilung der Datenpunkte der Datensätze kann somit eine Verteilung von Punkten in dem vorgegebenen Koordinatensystem entsprechen.

In manchen Ausführungsbeispielen können in der räumlichen Verteilung der Datenpunkte Widersprüche auftreten, so kann sich bspw. die Position von Datenpunkten eines Datensatzes aus einer digitalen Straßenkarte (z. B. Fahrbahnbegrenzungen) von denen aus einem Kamerabild unterscheiden (bspw. kann eine Abweichung zwischen den Positionen über einem gewissen Toleranzwert liegen). Es gilt nun situationsabhängig (aktuelle Fahrsituation) zu beurteilen, welchem Datensatz ein höheres Vertrauensmaß zugestanden werden kann. Daher hängt der Gewichtsfaktor in manchen Ausführungsbeispielen von der räumlichen Verteilung der Datenpunkte der Datensätze in der aktuellen Fahrsituation ab.

Der Gewichtsfaktor ist mittels maschinellen Lernens ermittelt, welches insbesondere für Mustererkennung in komplexen und großen Datensätzen verwendet werden kann (eine große Anzahl an Mustern lässt sich nur schwer modellbasiert abbilden). Eine Mustererkennung und Ableitung von Vertrauensmaßen (Gewichtsfaktor(en)) mittels maschinellen Lernens kann hier vorteilhaft eingesetzt werden, um die Bewertung der Genauigkeit der Datensätze zu verbessern. Dadurch ist es möglich, ein aktuelles Spurmodell der Fahrbahn genauer und zuverlässiger zu ermitteln.

In manchen Ausführungsbeispielen ist das maschinelle Lernen mittels eines Referenz-Datensatzes und/oder eines Referenz-Spurmodells durchgeführt.

Wie oben erwähnt, kann beim maschinellen Lernen in manchen Ausführungsbeispielen eine Vielzahl an verschiedenen Datensätzen bei einer Menge an vorgegebenen Fahrsituationen (wie oben erwähnt bspw. bei variierenden Umweltbedingungen, Fahrzuständen, etc.) bei Referenzfahrten in einem Referenzfahrzeug für das Training eines maschinellen Lernalgorithmus gesammelt werden und auf einem leistungsfähigen Computer, einem Server, einer Cloud oder dergleichen trainiert werden. Ein Referenzfahrzeug kann dabei seine Position sehr genau bestimmen (bspw. über DGPS ("Differential Global Positioning System") mit zusätzlicher Inertial-Navigationseinheit) und verfügt über eine sehr genaue (digitale) Straßenkarte, die basierend auf der sehr genauen Positionsbestimmung einen Referenz-Datensatz bereitstellt. Ein solches Referenzfahrzeug kann dabei die gleichen Sensoren aufweisen wie ein Fahrzeug, in dem das hierin beschriebene Verfahren ausgeführt wird. Die Datensätze des Referenzfahrzeugs sind somit repräsentativ für solche Datensätze, die in einem Fahrzeug anfallen, in dem das hierin beschriebene Verfahren ausgeführt wird. Daher kann in den vorgegebenen Fahrsituationen ermittelt werden welche Datensätze ein hohes Vertrauensmaß und welche ein geringeres Vertrauensmaß für die Erzeugung eines aktuelles Spurmodell einer Fahrbahn aufweisen.

Basierend auf einer Abweichung zwischen Datenpunkten der verschiedenen Datensätze des Referenzfahrzeugs und Datenpunkten des Referenz-Datensatzes kann in den vorgegebenen Fahrsituationen mittels maschinellen Lernens der wenigstens eine Gewichtsfaktor ermittelt werden.

In manchen Ausführungsbeispielen kann aus dem Referenz-Datensatz ein genaues Referenz-Spurmodell der Fahrbahn bestimmt werden, welches beim maschinellen Lernen verwendet werden kann. Basierend auf einer Abweichung zwischen dem erzeugten Spurmodell der Fahrbahn auf Grundlage der zusammengeführten Datensätze des Referenz-Fahrzeugs und dem Referenz-Spurmodell kann der Gewichtsfaktor in den vorgegebenen Fahrsituationen ermittelt werden.

In manchen Ausführungsbeispielen stellt eine Egomotion-Schätzung und/oder eine Kamera und/oder eine Karte und/oder eine Objektspur jeweils einen Datensatz bereit.

In einer Egomotion-Schätzung wird bei manchen Ausführungsbeispielen eine Position, Richtung, Ausrichtung, Geschwindigkeit, Beschleunigung, und dergleichen des Fahrzeugs ermittelt und darauf basierend ein zukünftiger Fahrkorridor des Fahrzeugs auf der Fahrbahn geschätzt. Bei manchen Ausführungsbeispielen werden aus einem Kamerabild verschiedene (Fahrbahn-)Merkmale extrahiert und in einem Datensatz bereitgestellt, die sich für eine Erzeugung eines Spurmodells der Fahrbahn eignen. In manchen Ausführungsbeispielen werden aus einer Karte (digitale Straßenkarte) basierend auf z. B. einer Positionsbestimmung oder von Landmarken, die in einem Kamerabild identifiziert wurden, (Fahrbahn-)Merkmale ermittelt. In manchen Ausführungsbeispielen stellt eine Objektspur einen Datensatz bereit, wobei eine Objektspur z..B ein zeitlicher Verlauf der Position von anderen Fahrzeugen oder des eigenen Fahrzeugs sein kann.

In manchen Ausführungsbeispielen wird das aktuelle Spurmodell der Fahrbahn auf Grundlage der zusammengeführten Datensätze erzeugt. Dabei können die zusammengeführten Datensätze, wie oben erwähnt, zunächst ins gleiche Bezugssystem transformiert sein, modellbasierte Genauigkeiten von Datenpunkten der Datensätze ermittelt sein und der Gewichtsfaktor in der aktuellen Fahrsituation bestimmt sein.

In manchen Ausführungsbeispielen wird das aktuelle Spurmodell der Fahrbahn weiter auf Grundlage eines prädizierten Spurmodells der Fahrbahn erzeugt wird.

Das prädizierte Spurmodell der Fahrbahn kann in manchen Ausführungsbeispielen basierend auf einem vorher erzeugten Spurmodell der Fahrbahn ermittelt sein. Das prädizierte Spurmodell der Fahrbahn kann bspw. auf Grundlage der Fahrzeuggeschwindigkeit, Beschleunigungen und dergleichen prognostiziert sein, wobei entsprechend eine wahrscheinliche zukünftige Position der (Fahrbahn-)Merkmale geschätzt werden kann. Basierend auf dem zusammengeführten Datensätzen und dem prädizierten Spurmodell der Fahrbahn kann in manchen Ausführungsbeispielen das aktuellen Spurmodell erzeugt werden.

Manche Ausführungsbeispiele betreffen ein Computerprogramm, umfassend Befehle, die bei der Ausführung des Programms durch einen Computer diesen veranlassen, das hierin beschriebene Verfahren auszuführen.

Der Computer weist dafür elektronische Komponenten wie bspw. eine oder mehrere CPUs (von "Central Processing Unit"), eine oder mehrere GPUs (von "Graphical Processing Unit"), einen oder mehrere ASICs (von "Application Specific Integrated Circuit"), elektronische Speicherelemente oder dergleichen auf, die typischerweise für die in dem Verfahren notwendigen Berechnungen verwendet werden. In Ausführungsbeispielen im Kraftfahrzeugumfeld kann das Computerprogramm insbesondere ein Steuergerät oder einen Bordcomputer oder dergleichen veranlassen das hierin beschriebene Verfahren auszuführen oder die Befehle auf mehrere Steuergeräte, Prozessoren, GPUs, ASICs oder dergleichen entsprechend verteilen, um das hierin beschriebene Verfahren auszuführen.

Manchen Ausführungsbeispiele betreffen eine Vorrichtung zur Datenverarbeitung, umfassend Mittel zur Ausführung des Verfahrens nach einem der vorherigen Ansprüche.

Die Vorrichtung zur Datenverarbeitung kann dabei grundsätzlich von einem wie oben beschriebenen Computer, Steuergerät, Bordcomputer oder dergleichen realisiert sein, um das hierin beschriebene Verfahren auszuführen.

Ausführungsbeispiele der Erfindung werden nun beispielhaft und unter Bezugnahme auf die beigefügte Zeichnung beschrieben, in der:
Fig. 1 schematisch ein erstes Ausführungsbeispiel eines Datensatzes von einer Egomotion-Schätzung in einem Kraftfahrzeug zeigt;
Fig. 2 schematisch ein zweites Ausführungsbeispiel eines Datensatzes von einer Kamera in einem Kraftfahrzeug zeigt;
Fig. 3 schematisch ein drittes Ausführungsbeispiel eines Datensatzes von einer Karte in einem Kraftfahrzeug zeigt;
Fig. 4 schematisch ein viertes Ausführungsbeispiel eines Datensatzes von einer Objektspur in einem Kraftfahrzeug zeigt;
Fig. 5 schematisch ein Ausführungsbeispiel mehrerer Datensätze in einem Kraftfahrzeug zeigt;
Fig. 6 schematisch ein Ausführungsbeispiel von modellbasierten Genauigkeiten von Datenpunkten von Datensätzen in einem Kraftfahrzeug zeigt;
Fig. 7 schematisch ein Ausführungsbeispiel eines Widerspruchs in einer räumlichen Verteilung von Datenpunkten von Datensätzen in einem Kraftfahrzeug zeigt;
Fig. 8 in einem Blockdiagramm ein Ausführungsbeispiel einer Vorrichtung zur Datenverarbeitung zur Zusammenführung mehrerer Datensätze für die Erzeugung eines aktuellen Spurmodells einer Fahrbahn zeigt; und
Fig. 9 in einem Ablaufdiagramm ein Ausführungsbeispiel eines Verfahrens für die Zusammenführung mehrerer Datensätze für die Erzeugung eines aktuellen Spurmodells zeigt.

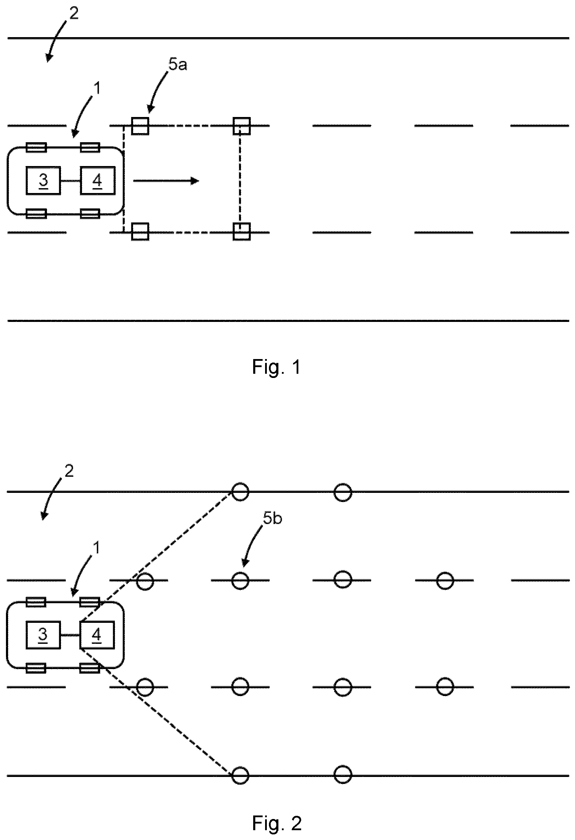

In Fig. 1 ist schematisch das erste Ausführungsbeispiel eines Datensatzes 5a von einer Egomotion-Schätzung in einem Kraftfahrzeug 1 gezeigt.

Das Kraftfahrzeug 1 fährt auf einer Fahrbahn 2 und weist eine Vorrichtung 3 zur Datenverarbeitung auf, hier einen Bordcomputer. Das Kraftfahrzeug 1 weist Datenquellen 4 auf. In diesem Ausführungsbeispiel stehen die Datenquellen 4 zusammenfassend für mehrere Umfeld- und Eigenbewegungssensoren (Kamera, Geschwindigkeits- und Beschleunigungssensoren) und einer digitalen Straßenkarte, aus denen ein Datensatz 5a von einer Egomotion-Schätzung, ein Datensatz 5b von einer Kamera, ein Datensatz 5c einer Karte und ein Datensatz 5d einer Objektspur erzeugt wird und eine aktuelle Fahrsituation ermittelt wird. Die Datensätze 5a-d werden der Vorrichtung 3 zur Datenverarbeitung zur Zusammenführung der Datensätze für die Erzeugung eines aktuellen Spurmodells der Fahrbahn 2 bereitgestellt.

Die Fahrbahn 2 weist drei Fahrspuren auf, die durch mehrere Fahrbahnmarkierungen begrenzt werden. Der Datensatz 5a weist Datenpunkte (dargestellt durch die kleinen Quadrate) auf, die der Egomotion-Schätzung des Kraftfahrzeugs 1 entsprechen. Die Egomotion-Schätzung ermittelt den zukünftigen Fahrkorridor (eingegrenzt durch die kurz gestrichelte Linie) des Kraftfahrzeugs 1, welcher durch die Datenpunkte des Datensatzes 5a begrenzt ist.

In Fig. 2 ist schematisch das zweite Ausführungsbeispiel eines Datensatzes 5b von einer Kamera in dem Kraftfahrzeug 1 gezeigt.

Das Kraftfahrzeug 1 entspricht dem Kraftfahrzeug aus dem Ausführungsbeispiel zu Fig. 1. Eine Kamera aus den Datenquellen 4 weist ein Sichtfeld auf (dargestellt durch den Bereich zwischen den kurz gestrichelten Linien), innerhalb dessen die Kamera Bilder des Bereichs vor dem Kraftfahrzeug 1 aufnimmt. Aus den aufgenommen Bildern werden in diesem Ausführungsbeispiel von der Kamera (Fahrbahn-)Merkmale extrahiert, die einen Datensatz 5b bilden. Der Datensatz 5b weist mehrere Datenpunkte (dargestellt durch die kleinen Kreise) auf, welche den extrahierten Merkmalen entsprechen und hier Teile der Fahrbahnmarkierungen sind.

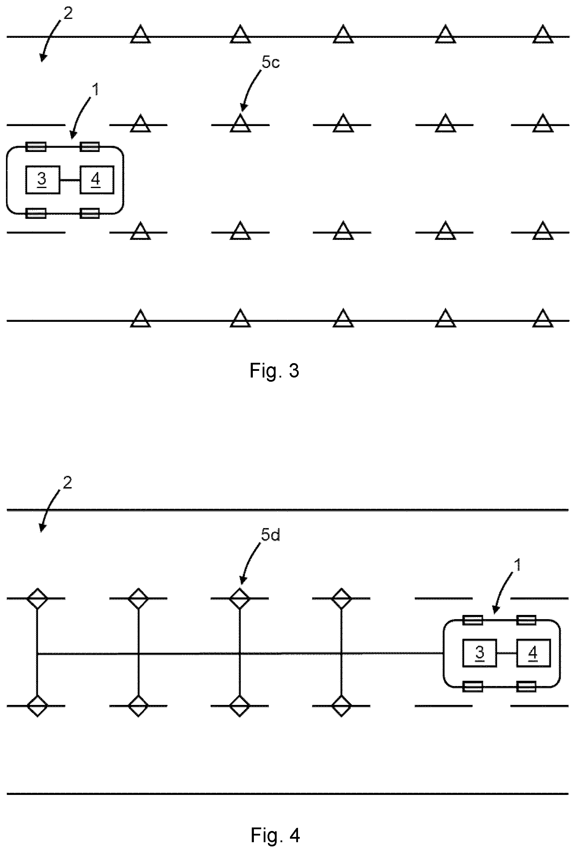

In Fig. 3 ist schematisch das dritte Ausführungsbeispiel eines Datensatzes 5c von einer Karte in dem Kraftfahrzeug 1 gezeigt.

Das Kraftfahrzeug 1 entspricht dem Kraftfahrzeug 1 aus den Ausführungsbeispielen zu Fig. 1 und 2. Basierend auf einer in den Kamerabildern erkannten Landmarke (nicht gezeigt) wird ein Datensatz 5c aus einer Karte (hier digitale Straßenkarte) bereitgestellt. Der Datensatz weist mehrere Datenpunkte (dargestellt durch die kleinen Dreiecke) auf, welche denen aus der Karte ermittelten Fahrbahnmarkierungen entsprechen.

In Fig. 4 ist schematisch das vierte Ausführungsbeispiel eines Datensatzes 5d von einer Objektspur in dem Kraftfahrzeug 1 gezeigt.

Das Kraftfahrzeug 1 entspricht dem Kraftfahrzeug 1 aus den Ausführungsbeispielen zu Fig. 1 bis 3. Basierend auf dem zeitlichen Verlauf der Position des Kraftfahrzeugs 1 wird der Datensatz 5d der Objektspur ermittelt, der mehrere Datenpunkte (dargestellt durch die kleinen Rauten) aufweist.

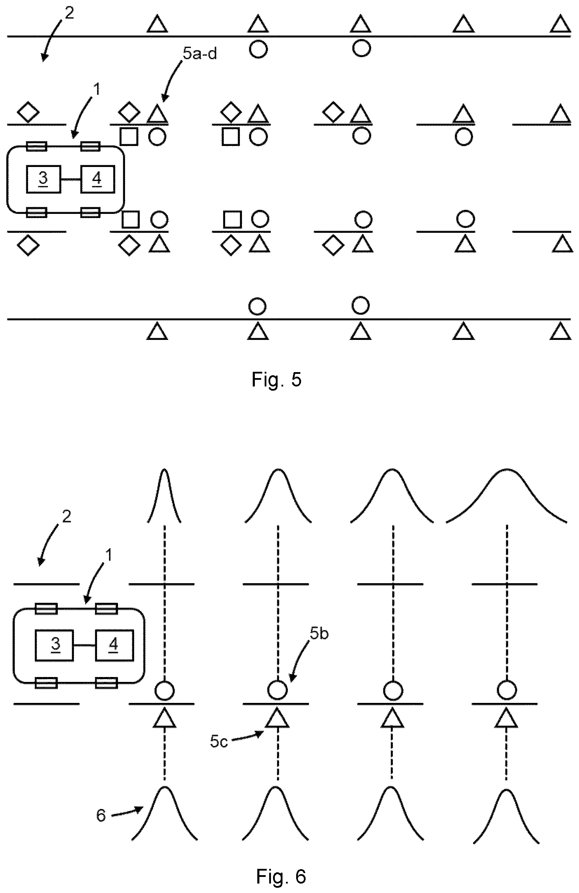

In Fig. 5 ist schematisch das Ausführungsbeispiel mehrerer Datensätze 5a-d in dem Kraftfahrzeug 1 gezeigt.

Das Kraftfahrzeug 1 entspricht dem Kraftfahrzeug 1 aus den Ausführungsbeispielen zu Fig. 1 bis 4. Die Datensätze 5a-d entsprechen dem Datensatz 5a der Egomotion-Schätzung aus Fig. 1, dem Datensatz 5b der Kamera aus Fig. 2, dem Datensatz 5c der Karte aus Fig. 3 und dem Datensatz 5d der Objektspur aus Fig. 4. Die Datensätze 5a-d werden der Vorrichtung 3 zur Datenverarbeitung bereitgestellt, um diese für die Erzeugung eines aktuellen Spurmodells der Fahrbahn 2 zusammenzuführen.

In Fig. 6 ist schematisch das Ausführungsbeispiel von modellbasierten Genauigkeiten von Datenpunkten von Datensätzen 5b und 5c in dem Kraftfahrzeug 1 gezeigt.

Das Kraftfahrzeug 1 entspricht dem Kraftfahrzeug 1 aus den Ausführungsbeispielen zu Fig. 1 bis 5. In Fig. 6 ist beispielhaft ein Teil der Datenpunkte der Datensätze 5b und 5c gezeigt. In diesem Ausführungsbeispiel sind zu den Datenpunkten der Datensätze 5b und 5c modellbasierte Genauigkeiten 6 ermittelt und zusätzlich zu den entsprechenden Datenpunkten eingezeichnet (dargestellt durch die gestrichelte Linie und den korrespondierenden Glocken-Kurven ober- und unterhalb der Datenpunkte).

Die Glocken-Kurven entsprechen einer Modellierung der Genauigkeit bzw. Fehlerfunktion der einzelnen Datenpunkte als Gauß-Verteilung, die basierend auf Erfahrungswerten und technischen Eigenschaften der Kamera und der räumlichen Auflösung der Karte ermittelt sind. In diesem Ausführungsbeispiel weist jeder Datenpunkt aus dem Datensatz 5c der Karte die gleiche Genauigkeit auf (limitiert durch die Genauigkeit der Karte). Hingegen ist die Genauigkeit eines Datenpunktes aus dem Datensatz 5b der Kamera abhängig von einem Abstand zu dem Kraftfahrzeug 1, wobei Datenpunkte in geringerer Entfernung zum Kraftfahrzeug 1 eine höhere Genauigkeit aufweisen als Datenpunkte in größerer Entfernung zu dem Kraftfahrzeug 1 (entspricht einer kleiner werdenden Auflösung der Kamera für weit entfernte Objekte). Dies wird durch die breitere Glocken-Kurve für Datenpunkte in größerer Entfernung zu dem Kraftfahrzeug 1 illustriert. Die verschiedenen Informationsquellen haben somit unterschiedliche (modellbasierte) Genauigkeiten 6.

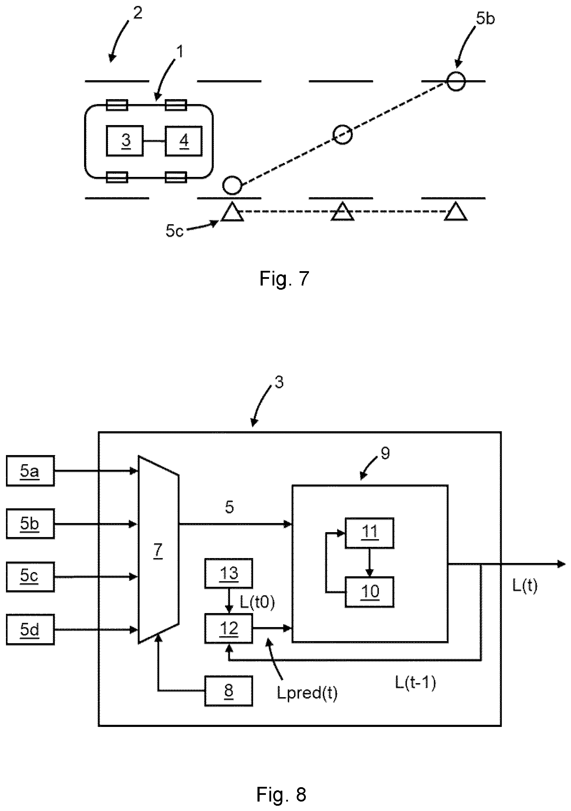

In Fig. 7 ist schematisch das Ausführungsbeispiel eines Widerspruchs in einer räumlichen Verteilung von Datenpunkten von Datensätzen 5b und 5c in einem Kraftfahrzeug 1 gezeigt.

Das Kraftfahrzeug 1 entspricht dem Kraftfahrzeug 1 aus den Ausführungsbeispielen zu Fig. 1 bis 6. In Fig. 7 ist beispielhaft ein Teil der Datenpunkte der Datensätze 5b und 5c gezeigt, wobei in diesem Ausführungsbeispiel die räumliche Position eines Teils der Datenpunkte des Datensatzes 5b der räumlichen Position der Datenpunkte des Datensatzes 5c widersprechen, d. h. der Abstand zwischen zwei Datenpunkten, welche das gleiche Merkmal repräsentieren (hier bei den von links gesehen letzten beiden Merkmalen) ist größer als ein vorgegebener Toleranzwert.

Dieser Widerspruch in der räumlichen Verteilung der Datenpunkte der Datensätze 5b und 5c wird bei der Zusammenführung der Datensätze 5a-d in der Vorrichtung 3 zur Datenverarbeitung zur Erzeugung des aktuellen Spurmodells der Fahrbahn 2 in einer aktuellen Fahrsituation des Kraftfahrzeugs 1 berücksichtigt, indem die Datensätze 5a-d auf Grundlage eines Gewichtsfaktors zusammengeführt werden und den einzelnen Datensätzen 5a-d ein durch den Gewichtsfaktor repräsentiertes Vertrauensmaß zugewiesen wird.

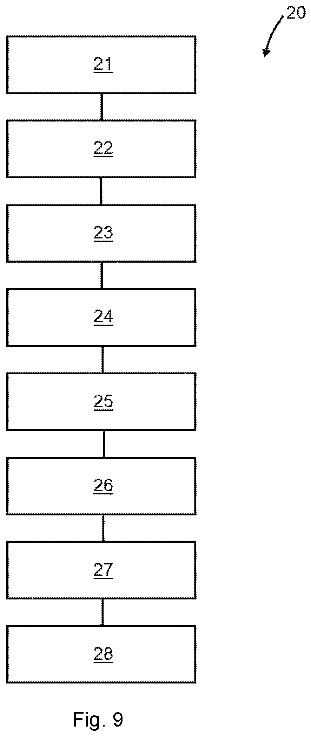

Das Ausführungsbeispiel des Verfahrens 20 für die Zusammenführung mehrerer Datensätze 5a-d für die Erzeugung eines aktuellen Spurmodells L(t) wird unter Bezugnahme auf das Blockdiagramm der Vorrichtung 3 zur Datenverarbeitung aus Fig. 8 und dem Ablaufdiagramm des Verfahrens 20 aus Fig. 9 beschrieben.

Die Vorrichtung 3 zur Datenverarbeitung entspricht der aus den Ausführungsbeispielen zu Fig. 1 bis 7 in dem Kraftfahrzeug 1. Die Vorrichtung 3 zur Datenverarbeitung ist in Fig. 8 schematisch in einem Blockdiagramm dargestellt und zu Illustrationszwecken in mehrere Einheiten unterteilt, wobei eine solche Unterteilung in Einheiten nicht als strukturelle Limitierung der Vorrichtung 3 zur Datenverarbeitung anzusehen ist. Die Einheiten sind hier als Software-Einheiten zu verstehen, die zur Vereinfachung der Darstellung als rechteckige Blöcke eingezeichnet sind und einzelnen Schritte des Verfahrens entsprechen. Zur Ausführung der einzelnen Schritte weist die Vorrichtung 3 zur Datenverarbeitung eine CAN-Schnittstelle (nicht gezeigt), eine CPU (nicht gezeigt), und digitale Speicherelemente (nicht gezeigt) auf. Die Datensätze 5a-d werden von den Datenquellen 4 der Vorrichtung 3 zur Datenverarbeitung bereitgestellt.

Bei 21 führt eine Fusions-Einheit 7 die Datensätze 5a-d für die Erzeugung eines aktuellen Spurmodells L(t) der Fahrbahn 2 auf Grundlage wenigstens eines Gewichtsfaktors zusammen, wobei der Gewichtsfaktor mittels maschinellen Lernens ermittelt ist.

Der wenigstens eine Gewichtsfaktor (hier jeweils einer für jeden der Datensätze 5a-d) wird hier aus einem trainierten neuronalen Netzwerk 8 (trainierter maschineller Lernalgorithmus) bestimmt, wobei der wenigstens eine Gewichtsfaktor bei 22 von einer vorgegebenen Fahrsituation, bei 23 von den Datensätzen 5a-d in einer aktuell ermittelten Fahrsituation und bei 24 von einer räumlichen Verteilung von Datenpunkten der Datensätze 5a-d in der aktuell ermittelten Fahrsituation abhängt. Der Gewichtsfaktor liefert somit für jeden der Datensätze 5a-d ein Vertrauensmaß, um die situationsabhängige (aktuelle Fahrsituation) Genauigkeit der Datensätze zu bewerten.

Bei 25 wurde das maschinelle Lernen (vorab) mittels eines Referenz-Datensatzes durchgeführt, wie hierin ausgeführt.

Bei 26 wurde jeweils ein Datensatz der Datensätze 5a-d von einer Egomotion-Schätzung, einer Kamera, einer Karte und einer Objektspur, wie oben erwähnt, der Vorrichtung 3 zur Datenverarbeitung bereitgestellt.

Die Fusions-Einheit 7 transformiert die Datensätze 5a-d bei der Zusammenführung in ein gemeinsames Koordinatensystem und ermittelt zusätzlich modellbasierte Genauigkeiten 6 (Varianzen) der Datenpunkte der Datensätze 5a-d.

Die zusammengeführten Datensätze 5 werden einer Optimierungs-Einheit 9 übergeben, die bei 27 das aktuelle Spurmodell L(t) der Fahrbahn 2 auf Grundlage der zusammengeführten Datensätze 5 erzeugt.

Um den Fahrbahnverlauf (inklusive Nachbarspuren) bzw. das aktuelle Spurmodell L(t) der Fahrbahn 2 robust und in hoher Güte erzeugen zu können, wird ein modellbasierter Optimierungsalgorithmus 10 verwendet. Im modellbasierten Optimierungsalgorithmus 10 wird ein Kostentheorem (Methode der kleinsten Quadrate) aufgestellt. Im modellbasierten Optimierungsalgorithmus 10 werden die zusammengeführten Datensätze 5 berücksichtigt, d. h. die (transformierten) Datensätze 5a-d, die modellbasierten Genauigkeiten 6 und die Gewichtsfaktoren. Dadurch ergibt sich eine integrierte Lösung basierend auf modellbasierten Genauigkeiten 6 (Varianzen) und einer situationsabhängigen Bewertungen der Datensätze bei der Erzeugung des aktuellen Spurmodells L(t) der Fahrbahn 2.

Das aktuelle Spurmodell L(t) der Fahrbahn 2 weist, wie oben erwähnt, mehrere Modellparameter auf, die in der Optimierungs-Einheit 9 optimiert werden. Dafür weist die Optimierungs-Einheit 9 eine Assoziations-Einheit 11 auf, die eine Zuordnung von Datenpunkten aus den verschiedenen Datensätzen 5a-d im zusammengeführten Datensatz 5 ausführt. Dabei werden die Datenpunkte aus den verschiedenen Datensätzen 5a-d, die gleiche Merkmale repräsentieren, im zusammengeführten Datensatz 5 assoziiert, um im modellbasierten Optimierungsalgorithmus 10 die Optimierung der Modellparameter zu verbessern. Die Assoziations-Einheit 11 berücksichtigt dabei die Gewichtsfaktoren.

Des Weiteren wird bei 28 das aktuelle Spurmodell L(t) der Fahrbahn 2 auf Grundlage eines prädizierten Spurmodells Lpred(t) der Fahrbahn 2 erzeugt.

Die Vorrichtung 3 zur Datenverarbeitung weist dafür eine Prädiktions-Einheit 12 auf, die basierend auf der momentanen Geschwindigkeit und Beschleunigung des Fahrzeugs und des vorher erzeugten Spurmodells L(t-1) der Fahrbahn 2 das prädizierte Spurmodell Lpred(t) der Fahrbahn 2 ermittelt. Am ersten Zeitpunkt t0, an dem noch kein aktuelles Spurmodell L(t) der Fahrbahn 2 vorliegt, wird ein Start-Spurmodell L(t0) der Fahrbahn 2 in einer Modellstart-Einheit 13 geschätzt und für die Prädiktion verwendet.

Basierend auf einer Abweichung zwischen dem prädizierten Spurmodell Lpred(t) der Fahrbahn 2 und den zusammengeführten Datensätzen 5 wird im modellbasierten Optimierungsalgorithmus 10 das aktuelle Spurmodell L(t) der Fahrbahn 2 erzeugt und von der Optimierungs-Einheit 9 ausgegeben.

### Bezugszeichenliste

- 1: Kraftfahrzeug
- 2: Fahrbahn
- 3: Vorrichtung
- 4: Datenquellen
- 5: zusammengeführte Datensätze
- 5a-d: Datensätze
- 6: modellbasierte Genauigkeiten
- 7: Fusions-Einheit
- 8: trainiertes neuronales Netzwerk
- 9: Optimierungs-Einheit
- 10: modellbasierter Optimierungsalgorithmus
- 11: Assoziations-Einheit
- 12: Prädiktions-Einheit
- 13: Modellstart-Einheit
- 20: Verfahren

## Patentansprüche

1. Computerimplementiertes Verfahren (20) zur Zusammenführung mehrerer Datensätze (5a-d) für die Erzeugung eines aktuellen Spurmodells (L(t)) einer Fahrbahn (2), wobei das aktuelle Spurmodell (L(t)) einen oder mehrere Fahrbahnparameter und/oder eine mathematische Repräsentation der Fahrspuren der Fahrbahn und/oder eine Menge an Fahrbahn-Merkmalen aufweist, wobei mindestens eines von einer Egomotion-Schätzung, einer Kamera, einer Karte und einer Objektspur jeweils einen Datensatz bereitstellt, umfassend: Zusammenführen (21) der Datensätze (5a-d) für die Erzeugung des aktuellen Spurmodells (L(t)) der Fahrbahn (2) auf Grundlage wenigstens eines Gewichtsfaktors, wobei der Gewichtsfaktor mittels maschinellen Lernens ermittelt ist, wobei der Gewichtsfaktor einem Vertrauensmaß für einen Datensatz entspricht; Erzeugen (27) des aktuellen Spurmodells (L(t)) der Fahrbahn (2) auf Grundlage der zusammengeführten Datensätze (5), wobei das aktuelle Spurmodell (L(t)) der Fahrbahn (2) weiter auf Grundlage eines prädizierten Spurmodells (Lpred(t)) der Fahrbahn (2) erzeugt (28) wird.

2. Verfahren (20) nach Anspruch 1, wobei der wenigstens eine Gewichtsfaktor von einer vorgegebenen Fahrsituation abhängt (22).

3. Verfahren (20) nach Anspruch 2, wobei der wenigstens eine Gewichtsfaktor von den Datensätzen (5a-d) in einer aktuell ermittelten Fahrsituation abhängt (23).

4. Verfahren (20) nach Anspruch 3, wobei der wenigstens eine Gewichtsfaktor von einer räumlichen Verteilung von Datenpunkten der Datensätze (5a-d) in der aktuell ermittelten Fahrsituation abhängt (24).

5. Verfahren (20) nach einem der vorherigen Ansprüche, wobei das maschinelle Lernen mittels eines Referenz-Datensatzes und/oder eines Referenz-Spurmodells durchgeführt (25) ist.

6. Computerprogramm, umfassend Befehle, die bei der Ausführung des Programms durch einen Computer diesen veranlassen, das Verfahren (20) nach einem der vorherigen Ansprüche auszuführen.

7. Vorrichtung (3) zur Datenverarbeitung, umfassend Mittel zur Ausführung des Verfahrens (20) nach einem der Ansprüche 1 bis 5.

## Claims

1. Computer-implemented method (20) for combining multiple datasets (5a-d) to generate a current lane model (L(t)) of a roadway (2), wherein the current lane model (L(t)) includes one or more roadway parameters and/or a mathematical representation of the driving lanes of the roadway and/or a set of roadway features, wherein at least one of an ego-motion estimator, a camera, a map and an object lane each provides a dataset, the method comprising:
combining (21) the datasets (5a-d) to generate the current lane model (L(t)) of the roadway (2) on the basis of at least one weighting coefficient, wherein the weighting coefficient is determined by machine learning, wherein the weighting coefficient corresponds to a confidence measure for a dataset;
generating (27) the current lane model (L(t)) of the roadway (2) on the basis of the combined datasets (5), wherein the current lane model (L(t)) of the roadway (2) is further generated (28) on the basis of a predicted lane model (Lpred(t)) of the roadway (2).

2. Method (20) according to claim 1, wherein the at least one weighting coefficient depends on a predetermined driving situation (22).

3. Method (20) according to claim 2, wherein the at least one weighting coefficient depends on the datasets (5a-d) in a currently determined driving situation (23).

4. Method (20) according to claim 3, wherein the at least one weighting coefficient depends on a spatial distribution of data points of the datasets (5a-d) in the currently determined driving situation (24).

5. Method (20) according to any of the preceding claims, wherein the machine learning is performed using a reference dataset and/or a reference lane model (25).

6. Computer program comprising commands which, when the program is executed by a computer, cause the computer to execute the method (20) according to any of the preceding claims.

7. Data-processing device (3), comprising means for executing the method (20) according to any of claims 1 to 5.

## Revendications

1. Procédé (20) mis en œuvre par ordinateur pour la combinaison de plusieurs jeux de données (5a-d) pour la génération d'un modèle de voie actuel (L(t)) d'une chaussée (2), dans lequel le modèle de voie actuel (L(t)) présente un ou plusieurs paramètres de chaussée et/ou une représentation mathématique des voies de circulation de la chaussée et/ou un ensemble de caractéristiques de chaussée, dans lequel au moins l'une parmi une estimation de mouvement propre, une caméra, une carte et une voie d'objet fournit respectivement un jeu de données, comprenant :
la combinaison (21) des jeux de données (5a-d) pour la génération du modèle de voie actuel (L(t)) de la chaussée (2) sur la base d'au moins un facteur de pondération, dans lequel le facteur de pondération est déterminé au moyen d'un apprentissage automatique, dans lequel le facteur de pondération correspond à une mesure de confiance pour un jeu de données ;
la génération (27) du modèle de voie actuel (L(t)) de la chaussée (2) sur la base des jeux de données combinés (5), dans lequel le modèle de voie actuel (L(t)) de la chaussée (2) est en outre généré (28) sur la base d'un modèle de voie prédit (Lpred(t)) de la chaussée (2).

2. Procédé (20) selon la revendication 1, dans lequel l'au moins un facteur de pondération dépend (22) d'une situation de conduite prédéfinie.

3. Procédé (20) selon la revendication 2, dans lequel l'au moins un facteur de pondération dépend (23) des jeux de données (5a-d) dans une situation de conduite déterminée actuelle.

4. Procédé (20) selon la revendication 3, dans lequel l'au moins un facteur de pondération dépend (24) d'une répartition spatiale de points de données des jeux de données (5a-d) dans la situation de conduite déterminée actuelle.

5. Procédé (20) selon l'une des revendications précédentes, dans lequel l'apprentissage automatique est effectué (25) au moyen d'un jeu de données de référence et/ou d'un modèle de voies de référence.

6. Programme informatique, comprenant des instructions qui, lors de l'exécution du programme par un ordinateur, amènent celui-ci à exécuter le procédé (20) selon l'une des revendications précédentes.

7. Dispositif (3) pour le traitement de données, comprenant des moyens pour l'exécution du procédé (20) selon l'une des revendications 1 à 5.
